# EUROPEAN PATENT SPECIFICATION

(11) **EP 2 881 561 B1**
(45) Date of publication and mention of the grant of the patent: **25.10.2017**
(21) Application number: 14192998.4
(22) Date of filing: 13.11.2014
(51) Int. Cl.: F02B 37/24, F01D 17/16, F01D 25/00, F02C 6/12

(54) **Variable nozzle turbocharger**
Turbolader mit variabler Turbinengeometrie
Turbocompresseur à géométrie variable

(30) Priority: 09.12.2013 JP 2013254326
(43) Date of publication of application: 10.06.2015
(73) Proprietor: TOYOTA JIDOSHA KABUSHIKI KAISHA, Toyota-shi, Aichi, 471-8571 (JP)
(72) Inventor: Yonezawa, Koichi, Toyota-shi, Aichi 471-8571 (JP); Kuma, Hiroshi, Toyota-shi, Aichi 471-8571 (JP); Ikegami, Hiroaki, Toyota-shi, Aichi 471-8571 (JP); Kato, Toshihiro, Toyota-shi, Aichi 471-8571 (JP)
(74) Representative: Winter, Brandl, Fürniss, Hübner, Röss, Kaiser, Polte - Partnerschaft mbB

(56) References cited:
- EP-A2- 1 674 668
- EP-A2- 2 039 890
- WO-A1-2006/015613
- JP-A- 2013 163 972

## Description

### BACKGROUND OF THE INVENTION

The present invention relates to a forced-induction device.

Fig. 6 shows a forced-induction device 900 disclosed in Japanese Laid-Open Patent Publication No. 2006-233940. The forced-induction device 900 includes a scroll chamber 910, a link chamber 920, and a communication passage 930. The communication passage 930 connects the scroll chamber 910 and the link chamber 920 to each other.

Depending on the operating state of the internal combustion engine, the pressure difference between the scroll chamber 910 and the link chamber 920 is expected to increase in the forced-induction device 900. When the pressure difference between the scroll chamber 910 and the link chamber 920 is great, exhaust gas flows from the scroll chamber 910 to the link chamber 920. This increases the amount of deposit in the link chamber 920, which can accumulate a great amount of deposit in the link chamber 920.

The deposit discharging performance of the forced-induction device 900 can be improved, for example, by increasing the passage area of the communication passage 930. However, this structure would increase the amount of exhaust gas that flows from the scroll chamber 910 to the link chamber 920, so that the efficiency related to forced induction would be possibly reduced. Such reduction in the efficiency related to forced induction can be suppressed, for example, by reducing the passage area of the communication passage 930. However, a structure with a reduced passage area of the communication passage 930 would be contrary to the above described configuration for increasing the deposit discharging performance.

The prior art document WO 2006/015613 relates to a turbocharger in which an insert is mounted such that, in operation, a passage is located in the bottom part of the turbocharger where the accumulation of condensate in a compartment due to gravitation is expected. This passage overlaps radially with an outer periphery of the compartment so that a reliable drain from the compartment to the outside space of a volute portion of the turbine housing can be provided via a stepwise portion.

In a variable nozzle mechanism of document EP 2 039 890 A2, a drive chamber of an accommodating chamber is connected via a drain passage with two different diameters.

Document JP 2013 1639 72 A discloses that the wall surface that forms a communication passage includes an inclined wall surface of the cover member and a horizontal surface of the plate forming the remaining part of the communication passage. An end or step portion is provided between the inclined wall surface and the horizontal wall surface.

The next-coming prior art document EP 1 674 668 A2 discloses a variable geometry turbocharger having a communication hole that provides communication between a turbine-housing swirl chamber and a link chamber. The communication hole extends toward the lower portion of the turbine-housing swirl chamber, and when the variable geometry turbo charger is mounted in the vehicle, the communication hole is positioned in the lowest portion, namely, the portion of the variable geometry turbocharger, which is closest to the ground surface. A fuel flowing into the link chamber flows down to the turbine-housing swirl chamber through the communication hole. Accordingly, formation of sludge in the link chamber can be minimized.

### SUMMARY OF THE INVENTION

Accordingly, it is an objective of the present invention to provide a forced-induction device that reduces accumulation of deposit in a link chamber and minimizes reduction in the efficiency related to forced induction.

This object is solved by the subject matter of claim 1. Further embodiments are disclosed in the subclaims.

To achieve the foregoing objective and in accordance with one aspect of the present invention, a forced-induction device is provided that includes a nozzle vane, a link mechanism coupled to the nozzle vane, a housing, and a communication passage. The housing has a scroll chamber, in which the nozzle vane is located, and a link chamber, in which the link mechanism is located. The scroll chamber has a passage area that reduces from an upstream side to a downstream side in a flowing direction of exhaust gas in the scroll chamber. The communication passage connects the scroll chamber and the link chamber to each other. The communication passage has a first opening, which faces the scroll chamber, and a second opening, which faces the link chamber. The first opening has a larger passage area than the second opening.

The deposit accumulated in the link chamber receives various forces. Various forces include the force based on operation of the link mechanism, the pressure of exhaust gas flowing through the link chamber, and the force based on vibration of the forced-induction device. When receiving forces, the deposit may fall off the part where it is adhered. All or part of the deposit fallen off the adhesion part enter the communication passage.

According to the forced-induction device of the present invention, the passage area of the first opening of the communication passage is larger than the passage area of the second opening of the communication passage. Thus, compared to a case in which the passage area of the first opening is less than or equal to the passage area of the second opening, deposit in the link chamber is easily discharged to the scroll chamber through the communication passage. Deposit is thus less likely to be accumulated in the link chamber. Also, according to the forced-induction device of the present invention, as the passage area of the second opening is smaller than the passage area of the first opening, compared to a case in which the passage area of the whole communication passage is equal to the passage area of the first opening, exhaust gas in the scroll chamber is less likely to flow into the link chamber. The efficiency related to forced-induction is thus less likely to be reduced. In this manner, the forced-induction device according to the present invention reduces accumulation of deposit in the link chamber and minimizes reduction in the efficiency related to forced induction.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1A is a cross-sectional view illustrating a forced-induction device according to one embodiment;
Fig. 1B is an enlarged diagram illustrating the part surrounded by circle A in Fig. 1A;
Fig. 2 is a cross-sectional view taken along line 2-2 of Fig. 1A;
Fig. 3 is a pan view illustrating the link chamber in the forced-induction device shown in Fig. 2;
Fig. 4A is a graph representing the relationship between the turbine total efficiency and the intake flow rate;
Fig. 4B is a graph representing the relationship between the compressor efficiency and the intake flow rate;
Fig. 5 is a cross-sectional view taken along line 2-2 of Fig. 1A, illustrating a forced-induction device according to a modification; and
Fig. 6 is a cross-sectional view illustrating a conventional forced-induction device.

### DETAILED DESCRIPTION OF THE PREFERRED EMBODIMENTS

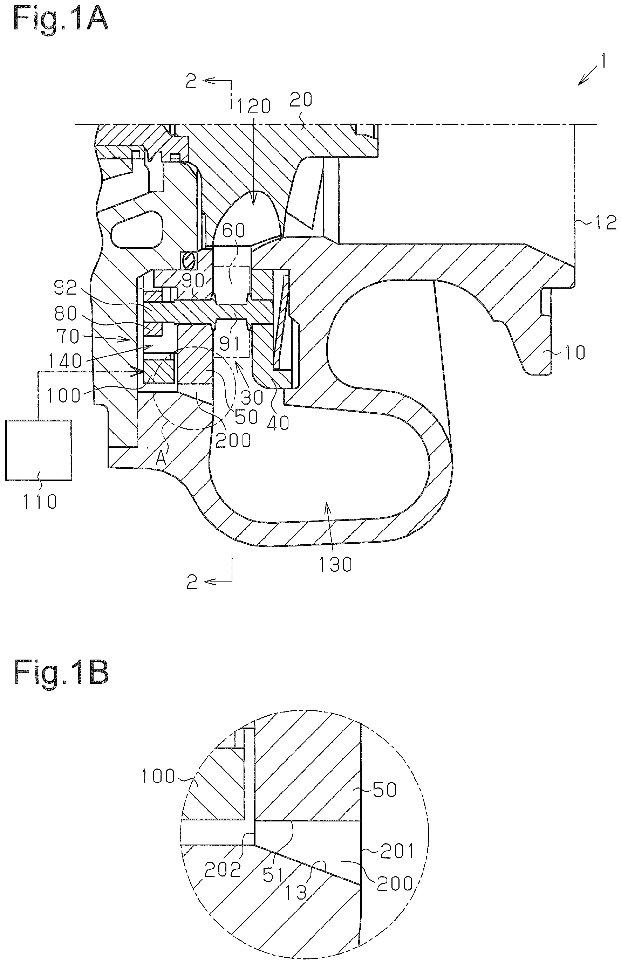

The configuration of a forced-induction device 1 will be described with reference to Fig. 1A.

The forced-induction device 1 connects the intake pipe (not shown) to the exhaust pipe (not shown) of an internal combustion engine. The forced-induction device 1 includes a housing 10, a turbine 20, a flow rate control mechanism 30, an actuator 110, a turbine chamber 120, a scroll chamber 130, a link chamber 140, and a communication passage 200.

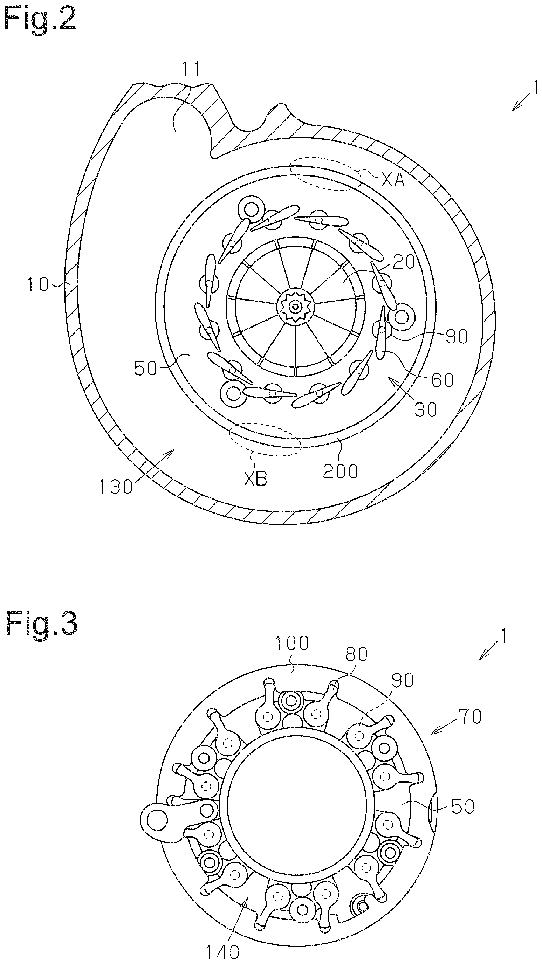

The housing 10 has an exhaust inlet 11 (refer to Fig. 2) and an exhaust outlet 12. The exhaust inlet 11 is connected to an upstream section of the exhaust pipe (not shown). The exhaust outlet 12 is connected to a downstream section of the exhaust pipe (not shown).

The turbine chamber 120 and the scroll chamber 130 are formed in the housing 10. The turbine chamber 120 and the scroll chamber 130 communicate with each other. The scroll chamber 130 is located about the turbine chamber 120. The turbine 20 is located in the turbine chamber 120.

The flow rate control mechanism 30 is located in the housing 10. The flow rate control mechanism 30 includes a support plate 40, a partition plate 50, a plurality of nozzle vanes 60, and a link mechanism 70.

The support plate 40 and the partition plate 50 are fixed to the housing 10. The support plate 40 and the partition plate 50 have annular shapes. The support plate 40 and the partition plate 50 face each other across part of the scroll chamber 130.

The link chamber 140 is formed between the partition plate 50 and the housing 10. The partition plate 50 has a first surface, which faces the scroll chamber 130, and a second surface, which is on the opposite side to the first surface and faces the link chamber 140. The link chamber 140 is formed by a recess in the housing 10. The link chamber 140 has an annular shape.

The link mechanism 70 includes a plurality of vane arms 80, a plurality of coupling shafts 90, and a unison ring 100. The unison ring 100 has an annular shape. The unison ring 100 is arranged in the link chamber 140. The unison ring 100 is arranged to be rotational with respect to the housing 10.

The coupling shafts 90 are fitted in holes of the support plate 40 and holes of the partition plate 50. The coupling shafts 90 are rotationally fitted to the support plate 40 and the partition plate 50. The coupling shafts 90 includes a nozzle-side portion 91, which is located in the scroll chamber 130, and an arm-side portion 92, which is located in the link chamber 140.

The vane arms 80 are arranged in the link chamber 140. The vane arms 80 are fixed to the arm-side portion 92 of the coupling shafts 90. As shown in Fig. 3, the vane arms 80 are arranged radially inside the unison ring 100. Distal portions of the vane arms 80 are fitted in recesses of the unison ring 100.

As shown in Fig. 1A, the nozzle vanes 60 are located in the scroll chamber 130 and at positions between the support plate 40 and the partition plate 50. The nozzle vanes 60 are fixed to the nozzle-side portion 91. As shown in Fig. 2, the nozzle vanes 60 are arranged to surround the turbine 20.

As shown in Fig. 1A, the actuator 110 is located outside the housing 10. The actuator 110 is fixed to the housing 10. The actuator 110 is connected to the unison ring 100. Based on command signals from the control device for the internal combustion engine, the actuator 110 outputs drive force for rotating the unison ring 100.

The configuration of the communication passage 200 will be described with reference to Fig. 1B.

The communication passage 200 is a space located between two opposed wall surface, specifically, between a peripheral surface 51 of the partition plate 50 and a wall surface of the housing 10 that faces the peripheral surface 51 (hereinafter, referred to as an opposed surface 13). The peripheral surface 51 is located radially outside the partition plate 50 with respect to the central axis of the turbine 20 and faces the housing 10. The communication passage 200 has a first opening 201 and a second opening 202. The first opening 201 faces the scroll chamber 130. The second opening 202 faces the link chamber 140. The communication passage 200 connects the scroll chamber 130 and the link chamber 140 to each other.

The wall surface that forms the communication passage 200 is inclined relative to the central axis of the turbine 20. This structure will hereafter be referred to as an inclination structure of the communication passage 200. The opposed surface 13 is inclined in the radial direction relative to the central axis of the turbine 20 such that the distance between the opposed surface 13 and the central axis of the turbine 20 increases as the distance from the second opening 202 increases. In other words, the communication passage 200 is tapered such that it becomes larger toward the first opening 201.

The passage area of the communication passage 200 increases from the second opening 202 toward the first opening 201. The passage area of the first opening 201 is larger than the passage area of the second opening 202. The passage area of the first opening 201 is the largest in the communication passage 200. The passage area of the second opening 202 is sufficiently large for allowing deposit formed in the link chamber 140 to enter the communication passage 200. The passage area of the second opening 202 is the smallest in the communication passage 200. The relationship between the passage area of the first opening 201 and the passage area of the second opening 202 is defined by the inclination structure of the communication passage 200. As one example, the passage area of the communication passage 200 is defined as the area of the communication passage 200 on an imaginary plane that is perpendicular to the central axis of the turbine 20.

The relationship between the scroll chamber 130 and the communication passage 200 will be described with reference to Fig. 2.

The passage area of the scroll chamber 130 decreases from the upstream side toward the downstream side in the flowing direction of exhaust gas in the scroll chamber 130. The velocity of flow of exhaust gas through the scroll chamber 130 increases as the passage area of the scroll chamber 130 is reduced. Therefore, the pressure of the scroll chamber 130 increases toward the downstream side in the flowing direction of exhaust gas in the scroll chamber 130. As one example, the passage area of the scroll chamber 130 is defined as the area of the scroll chamber 130 on an imaginary plane that includes and is parallel with the central axis of the turbine 20.

The communication passage 200 communicates with the scroll chamber 130 in the annular first opening 201. Thus, the communication passage 200 connects a part of the scroll chamber 130 of a relatively high pressure to the link chamber 140. Also, the communication passage 200 connects a part of the scroll chamber 130 of a relatively low pressure to the link chamber 140.

A first operation of the forced-induction device 1 will now be described with reference to Figs. 1A and 1B.

Based on output signals from sensors of the internal combustion engine, the control device outputs command signals to the actuator 110. Based on command signals from the control device, the actuator 110 outputs drive force for driving the unison ring 100. Based on the drive force of the actuator 110, the unison ring 100 rotates the vane arms 80 and the coupling shafts 90.

When rotated by operation of the unison ring 100, the vane arms 80 scrape deposit off an adhesion part of the link chamber 140. The adhesion part includes at least one of the wall surface of the housing that forms the link chamber 140 and the surface of the partition plate 50. That is, the deposit that has accumulated in the link chamber 140 includes at least one of the deposit adhered to the wall surface of the housing 10 forming the link chamber 140 and the deposit adhered to the surface of the partition plate 50.

The deposit fallen off the adhesion part is moved by one or both of the exhaust gas pressure and the gravity to flow into the communication passage 200 via the second opening 202. Since the passage area of the first opening 201 of the communication passage 200 is larger than the passage area of the second opening 202, the deposit in the communication passage 200 is easily discharged to the scroll chamber 130 from the second opening 202. After discharged to the scroll chamber 130 from the communication passage 200, the deposit is either burned by the exhaust gas flowing through the scroll chamber 130 or flows to the exhaust pipe from the forced-induction device 1 together with the exhaust gas.

A second operation of the forced-induction device 1 will be described with reference to Fig. 1A.

In some cases, the deposit accumulated in the link chamber 140 is caused to fall off the adhesion part, which is the wall surface of the housing 10 or the wall surface of the partition plate 50, by vibration of the forced-induction device 1. The deposit that has fallen off the adhesion part is moved to the link chamber 140 by the gravity and flows into the communication passage 200. The deposit that has flowed into the communication passage 200 is either burned in the scroll chamber 130 or flows to the exhaust pipe, as described in the above first operation.

A third operation of the forced-induction device 1 will be described with reference to Fig. 2.

Exhaust gas that has flowed out of the internal combustion engine flows into the scroll chamber 130 through the exhaust inlet 11. The exhaust gas in the scroll chamber 130 flows into the turbine chamber 120 through spaces between the circumferentially adjacent nozzle vanes 60. The exhaust gas in the turbine chamber 120 flows to the exhaust outlet 12 after passing through the turbine 20.

The communication passage 200 connects a part of the scroll chamber 130 of a relatively high pressure and a part of the scroll chamber 130 of a relatively low pressure to the link chamber 140. Thus, some of the exhaust gas in the scroll chamber 130 flows from the part of the scroll chamber 130 of a relatively high pressure to the link chamber 140 through the communication passage 200. Since the pressure in the scroll chamber 130 increases as the flow velocity of the exhaust gas flowing through the scroll chamber 130 increases, the part of the scroll chamber 130 of a relatively high pressure can be referred to as a high flow velocity part in the scroll chamber 130. Also, the part of the scroll chamber 130 of a relatively low pressure can be referred to as a low flow velocity part in the scroll chamber 130.

The exhaust gas in the link chamber 140 flows from a part of the link chamber 140 that corresponds to the part of the scroll chamber 130 of a relatively high pressure to a part of the link chamber 140 that corresponds to the part of the scroll chamber 130 of a relatively low pressure. Exhaust gas that flows through the link chamber 140 flows into the scroll chamber 130 through the communication passage 200.

Exhaust gas mainly flows from the downstream section of the scroll chamber 130, that is, the high flow velocity part, to the link chamber 140 through the communication passage 200. The exhaust gas that has flowed into the link chamber 140 then flows to the upstream section of the scroll chamber 130, that is, to the low flow velocity part through the communication passage 200. The upstream section of the scroll chamber 130 is located on the opposite side of the turbine 20 from the downstream section of the scroll chamber 130 with respect to the radial direction of the turbine 20.

A region XA of a broken line in Fig. 2 is one example of the downstream section of the scroll chamber 130. The downstream section of the scroll chamber 130 corresponds to the part of the scroll chamber 130 of a relatively high pressure. A region XB of a broken line in Fig. 2 is one example of the upstream section of the scroll chamber 130, which is located on the opposite side of the scroll chamber 130 from the downstream section. The upstream section of the scroll chamber 130 corresponds to the part of the scroll chamber 130 of a relatively low pressure.

The deposit in the link chamber 140 is easily caused to fall off the adhesion part by the flow of exhaust gas through the link chamber 140. The deposit fallen off the adhesion part is discharged to the scroll chamber 130 through the communication passage 200 by the flow of exhaust gas. The deposit that has been discharged to the scroll chamber 130 is either burned in the scroll chamber 130 or flows to the exhaust pipe, as described in the above first operation.

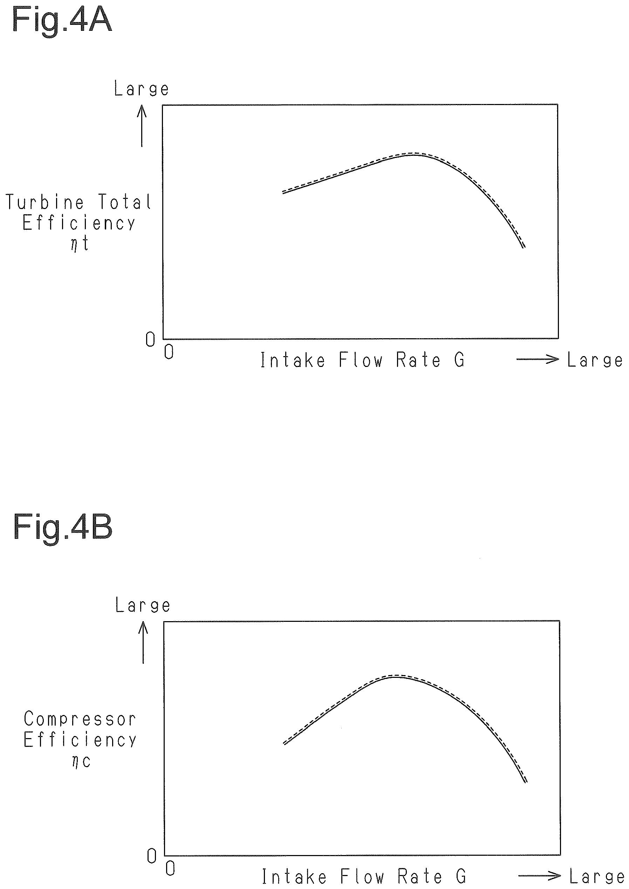

The efficiency of the forced-induction device 1 will now be described with reference to Fig. 4.

The present inventors conducted tests for checking the turbine total efficiency ηt and the compressor efficiency ηc of the forced-induction device 1, and the turbine total efficiency ηt and the compressor efficiency ηc of a forced-induction device of a comparative example. The tests were designed for checking the influence of the communication passage 200 on the turbine total efficiency ηt and the compressor efficiency ηc.

The forced-induction device of the comparative example had the same configuration as the forced-induction device 1 except for the following points. In the forced-induction device of the comparative example, all the wall surfaces forming the communication passage were parallel with the central axis of the turbine. In the forced-induction device of the comparative example, the passage area of the communication passage was constant from the opening facing the link chamber to the opening facing the scroll chamber. The passage area was substantially equal to the passage area of the second opening 202 of the forced-induction device 1.

The turbine total efficiency ηt refers to the efficiency of the entire forced-induction device, which is obtained by multiplying the turbine efficiency by the compressor efficiency ηc and by the machine efficiency. The turbine efficiency refers to the efficiency of rotation of the turbine and the compressor based on flow of exhaust gas. The compressor efficiency ηc refers to the efficiency of compression of intake air based on rotation of the compressor. The machine efficiency refers to the ratio of the output to the input, which reflects the mechanical loss of the forced-induction device.

The horizontal axis of the graph of Fig. 4A represents the intake flow rate G. The vertical axis of the graph of Fig. 4A represents the turbine total efficiency ηt. The relationship between the intake flow rate G and the turbine total efficiency ηt in the forced-induction device 1 is represented by a solid line. The relationship between the intake flow rate G and the turbine total efficiency ηt in the forced-induction device of the comparative example is represented by a broken line.

As shown in the graph, the turbine total efficiency ηt of the forced-induction device 1 and the turbine total efficiency ηt of the forced-induction device of the comparative example have no significant difference. This indicates that the communication passage 200 is unlikely to make substantial influence on the turbine total efficiency ηt.

The horizontal axis of the graph of Fig. 4B represents the intake flow rate G. The vertical axis of the graph of Fig. 4B represents the compressor efficiency ηc. The relationship between the intake flow rate G and the compressor efficiency ηc in the forced-induction device 1 is represented by a solid line. The relationship between the intake flow rate G and the compressor efficiency ηc in the forced-induction device of the comparative example is represented by a broken line.

As shown in the graph, the compressor efficiency ηc of the forced-induction device 1 and the compressor efficiency ηc of the forced-induction device of the comparative example had no significant difference. This indicates that the communication passage 200 is unlikely to make substantial influence on the compressor efficiency ηc.

The forced-induction device 1 achieves the following advantages.
(1) The passage area of the first opening 201 of the communication passage 200 is larger than the passage area of the second opening 202 of the communication passage 200. Therefore, compared to a case in which the passage area of the first opening 201 is smaller than or equal to the passage area of the second opening 202, the deposit in the link chamber 140 is easily discharged to the scroll chamber 130 through the communication passage 200. Deposit is thus less likely to be accumulated in the link chamber 140. Also, the passage area of the second opening 202 is smaller than the passage area of the first opening 201. Therefore, for example, compared to a case in which the passage area of the whole communication passage 200 is equal to the passage area of the first opening 201, exhaust gas in the scroll chamber 130 is less likely to flow into the link chamber 140. The efficiency related to forced-induction is thus less likely to be reduced. In this manner, the forced-induction device 1 reduces accumulation of deposit in the link chamber 140 and minimizes reduction in the efficiency related to forced induction.
(2) The communication passage 200 is structured to have an inclined wall surface. Compared to a case in which a step is formed in the communication passage 200, deposit is less likely to be retained in the communication passage 200. Deposit is thus less likely to be accumulated in the communication passage 200. Accordingly, deposit is easily discharged to the scroll chamber 130 from the link chamber 140.
(3) The communication passage 200 has an annular shape. This generates flow of exhaust gas in the link chamber 140 from a part corresponding to the high flow velocity part of the scroll chamber 130 to a part corresponding to the low flow velocity part of the scroll chamber 130. Thus, the deposit accumulated in the link chamber 140 is easily caused to fall off the adhesion part by the flow of exhaust gas. Accordingly, deposit in the link chamber 140 is easily discharged to the scroll chamber 130 through the communication passage 200.
(4) The forced-induction device 1 has a structure in which the communication passage 200 is formed between the peripheral surface 51 and the opposed surface 13. Therefore, compared to a case in which, for example, the partition plate 50 is machined to have a communication passage, a communication passage can be formed by less number of steps.

### Other Embodiments

The forced-induction device according to the present invention includes embodiments that are different from the above illustrated embodiment. The additional embodiments include the following modifications of the above illustrated embodiment. The following modifications can be combined as long as the combined modifications remain technically consistent with each other.

The inclination structure of the communication passage 200 may be formed by radially inclining the peripheral surface 51 with respect to the central axis of the turbine 20. The inclination of the peripheral surface 51 may be provided in addition to the inclination of the opposed surface 13 or, as an example to the background of the invention, the inclination of the peripheral surface 51 may replace the inclination of the opposed surface 13. That is, the inclination structure of the communication passage 200 may be changed to any structure as long as the two opposed wall surfaces that form the communication passage 200, namely, the peripheral surface 51 and the opposed surface 13, are inclined relative to each other such that the passage area of the first opening 201 is larger than the passage area of the second opening 202.

As another example to the background of the invention, the forced-induction device 1 may have a communication passage with a step structure instead of the inclination structure. Such a step structure has a part with a large passage area at a position closer to the scroll chamber 130 and a part with a small passage area at a position closer to the link chamber 140. The step structure of the communication passage is formed by providing a step on at least one of the opposed surface 13 and the peripheral surface 51.

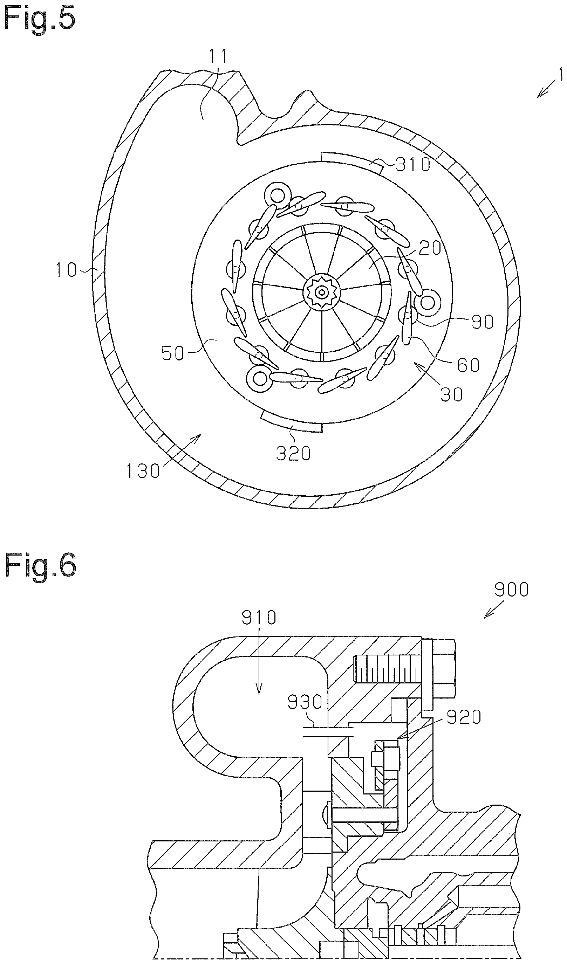

• The communication passage, or an additional communication passage, may be formed in the partition plate 50. Still, the communication passage of the partition plate 50 has a shape of a hole extending through the partition plate 50 and connects the scroll chamber 130 and the link chamber 140 to each other.
- The communication passage may have a shape other than an annular shape. As examples, the forced-induction device 1 may have one or more communication passages of shapes other than an annular shape. Fig. 5 illustrates the cross-sectional structure of a forced-induction device 1 according to an embodiment which has a plurality of communication passages according to the claim. The forced-induction device 1 has, as the communication passages, a high-pressure side communication passage 310 and a low-pressure side communication passage 320. The high-pressure side communication passage 310 connects the high flow velocity part, which is a part of the scroll chamber 130 of a small passage area, and the link chamber 140 to each other. The low-pressure side communication passage 320 connects the low flow velocity part, which is a part of the scroll chamber 130 of a larger passage area than the high velocity part, and the link chamber 140 to each other. The forced-induction device 1 of this modification operates in a manner similar to the third operation of the above illustrated embodiment.
- Instead of the partition plate 50, the forced-induction device 1 may have a partition portion integrated with the housing 10. The partition portion separates the scroll chamber 130 and the link chamber 140 from each other. A communication passage is formed at least either in the partition portion or between the housing 10 and the periphery of the partition portion.

## Claims

1. A forced-induction device comprising:
a turbine (20);
a nozzle vane (60);
a link mechanism (70) coupled to the nozzle vane (60);
a housing (10) having a turbine chamber (120), in which the turbine (20) is located, a scroll chamber (130), in which the nozzle vane (60) is located, and a link chamber (140), in which the link mechanism (70) is located, wherein the scroll chamber (130) has a passage area that reduces from an upstream side to a downstream side in a flowing direction of exhaust gas in the scroll chamber (130); and
a communication passage (200; 310, 320), which connects the scroll chamber (130) and the link chamber (140) to each other,
wherein the communication passage (200; 310, 320) has a first opening (201), which faces the scroll chamber (130), and a second opening (202), which faces the link chamber (140), wherein the first opening (201) has a larger passage area than the second opening (202),
the forced induction device being **characterized in that** a wall surface (13) that forms the communication passage (200; 310, 320) is inclined continuously over the entire area from the first opening (201) to the second opening (202) with respect to a central axis of the turbine (20) such that the first opening (201) has said larger passage area than the second opening (202).

2. The forced-induction device according to claim 1, wherein said wall surface is one (13) of two wall surfaces (13, 51), which are opposed to each other to form the communication passage (200; 310, 320), and the two wall surfaces (13, 51) are inclined with respect to each other such that the first opening (201) has said larger passage area than the second opening (202).

3. The forced-induction device according to claim 1 or 2, further comprising a partition plate (50), which is fixed to the housing (10) and separates the scroll chamber (130) and the link chamber (140) from each other,
wherein the communication passage (200; 310, 320) is formed between a peripheral surface (51) of the partition plate (50) and the wall surface (13) of the housing (10) that faces the peripheral surface (51).

4. The forced-induction device according to claim 3, wherein
the partition plate (50) is disk-shaped, and
the communication passage (200) is annular.

5. The forced-induction device according to any one of claims 1 to 3, further comprising, as the communication passage (310, 320), a high-pressure side communication passage (310) and a low-pressure side communication passage (320), wherein
the scroll chamber (130) includes a high flow velocity part and a low flow velocity part, which has a larger passage area than the high flow velocity part,
the high-pressure side communication passage (310) connects the high flow velocity part and the link chamber (140) to each other, and
the low-pressure side communication passage (320) connects the low flow velocity part and the link chamber (140) to each other.

## Patentansprüche

1. Eine Aufladevorrichtung, aufweisend:
eine Turbine (20),
eine Düsenschaufel (60),
einen Verknüpfungsmechanismus (70), der mit der Düsenschaufel (60) gekoppelt ist,
ein Gehäuse (10), das eine Turbinenkammer (120), in welcher die Turbine (20) angeordnet ist, eine Schraubenkammer (130), in welcher die Düsenschaufel (60) angeordnet ist, und eine Verknüpfungskammer (140), in welcher der Verknüpfungsmechanismus (70) angeordnet ist, aufweist, wobei die Schraubenkammer (130) eine Leitungsfläche aufweist, die sich von einer stromaufwärtigen Seite zu einer stromabwärtigen Seite in einer Strömungsrichtung eines Ausstoßgases in der Schraubenkammer (130) reduziert, und
eine Kommunikationsleitung (200; 310, 320), welche die Schraubenkammer (130) und die Verknüpfungskammer (140) miteinander verbindet,
wobei die Kommunikationsleitung (200; 310, 320) eine erste Öffnung (201), welche zu der Schraubenkammer (130) weist, und eine zweite Öffnung (202), welche zu der Verknüpfungskammer (140) weist, aufweist, wobei die erste Öffnung (201) eine größere Leitungsfläche als die zweite Öffnung (202) aufweist,
die Aufladevorrichtung **dadurch gekennzeichnet** wird, dass eine Wandoberfläche (13), welche die Kommunikationsleitung (200; 310, 320) bildet, kontinuierlich über die gesamte Fläche von der ersten Öffnung (201) zu der zweiten Öffnung (202) bezüglich einer Zentralachse der Turbine (20) geneigt ist, so dass die erste Öffnung (201) die größere Leitungsfläche als die zweite Öffnung (202) aufweist.

2. Die Aufladevorrichtung gemäß dem Anspruch 1, wobei die Wandoberfläche eine (13) von zwei Wandoberflächen (13, 51) ist, welche zueinander gegenüber liegen, um die Kommunikationsleitung (200, 310, 320) zu bilden, und
die zwei Wandoberflächen (13, 51) bezüglich einander geneigt sind, sodass die erste Öffnung (201) die größere Leitungsfläche als die zweite Öffnung (202) aufweist.

3. Die Aufladevorrichtung gemäß dem Anspruch 1 oder 2, darüber hinaus aufweisend eine Unterteilungsscheibe (50), welche zu dem Gehäuse (10) festgelegt ist, und die Schraubenkammer (130) und die Verknüpfungskammer (140) voneinander separiert,
wobei die Kommunikationsleitung (200; 310, 320) zwischen einer peripheren Oberfläche (51) der Unterteilungsscheibe (50) und der Wandoberfläche (13) und des Gehäuses (10), welches zu der peripheren Oberflächen (51) weist, gebildet ist.

4. Die Aufladevorrichtung gemäß dem Anspruch 3, wobei
die Unterteilungsscheibe (50) scheibenförmig ist und
die Kommunikationsleitung (200) ringförmig ist.

5. Die Aufladevorrichtung gemäß einem der Ansprüche 1 bis 3, darüber hinaus aufweisend eine Hochdruck-seitige Kommunikationsleitung (310) und eine Niederdruck-seitige Kommunikationsleitung (320) als die Kommunikationsleitung (310, 320), wobei
die Schraubenkammer (130) einen Hochströmungsgeschwindigkeitsteil und einen Niederströmungsgeschwindigkeitsteil, welcher eine größere Leitungsfläche als der Hochströmungsgeschwindigkeitsteil aufweist, beinhaltet,
die Hochdruck-seitige-Kommunikationsleitung (310) den Hochströmungsgeschwindigkeitsteil und die Verknüpfungskammer (140) miteinander verbindet, und
die Niederdruck-seitige Kommunikationsleitung (320) den Niederströmungsgeschwindigkeitsteil und die Verknüpfungskammer (140) miteinander verbindet.

## Revendications

1. Dispositif d'induction forcée comprenant :
une turbine (20) ;
un volet de tuyère (60) ;
un mécanisme de liaison (70) couplé au volet de tuyère (60) ;
un logement (10) ayant une chambre de turbine (120) dans laquelle la turbine (20) est positionnée, une chambre à spirale (130) dans laquelle le volet de tuyère (60) est positionné et une chambre de liaison (140) dans laquelle le mécanisme de liaison (70) est positionné, dans lequel la chambre à spirale (130) a une zone de passage qui se réduit d'un côté en amont à un côté en aval dans une direction d'écoulement du gaz d'échappement dans la chambre à spirale (130) ; et
un passage de communication (200 ; 310, 320) qui raccorde la chambre à spirale (130) et la chambre de liaison (140) entre elles,
dans lequel le passage de communication (200 ; 310, 320) a une première ouverture (201) qui fait face à la chambre à spirale (130) et une seconde ouverture (202) qui fait face à la chambre de liaison (140), dans lequel la première ouverture (201) a une plus grande zone de passage que la seconde ouverture (202),
le dispositif d'induction forcée étant **caractérisé en ce qu'**une surface de paroi (13) qui forme le passage de communication (200 ; 310, 320) est inclinée de manière continue sur toute la zone allant de la première ouverture (201) à la seconde ouverture (202) par rapport à un axe central de la turbine (20) de sorte que la première ouverture (201) a une plus grande zone de passage que la seconde ouverture (202).

2. Dispositif d'induction forcée selon la revendication 1, dans lequel ladite surface de paroi est l'une (13) parmi deux surfaces de paroi (13, 51) qui sont opposées entre elles pour former le passage de communication (200 ; 310, 320), et
les deux surfaces de paroi (13, 51) sont inclinées l'une par rapport à l'autre, de sorte que la première ouverture (201) a ladite plus grande zone de passage que la seconde ouverture (202).

3. Dispositif d'induction forcée selon la revendication 1 ou 2, comprenant en outre une plaque de séparation (50) qui est fixée sur le boîtier (10) et sépare la chambre à spirale (130) et la chambre de liaison (140) l'une de l'autre,
dans lequel le passage de communication (200 ; 310, 320) est formé entre une surface périphérique (51) de la plaque de séparation (50) et la surface de paroi (13) du logement (10) qui fait face à la surface périphérique (51).

4. Dispositif d'induction forcée selon la revendication 3, dans lequel :
la plaque de séparation (50) est en forme de disque, et
le passage de communication (200) est annulaire.

5. Dispositif d'induction forcée selon l'une quelconque des revendications 1 à 3, comprenant en outre, en tant que passage de communication (310, 320), un passage de communication du côté de la haute pression (310) et un passage de communication du côté de la basse pression (320), dans lequel :
la chambre à spirale (130) comprend une partie à vitesse d'écoulement élevée et une partie à faible vitesse d'écoulement, qui a une plus grande zone de passage que la partie à vitesse d'écoulement élevée,
le passage de communication du côté de la haute pression (310) raccorde la partie à vitesse d'écoulement élevée et la chambre de liaison (140) entre elles, et
le passage de communication du côté de la basse pression (320) raccorde la partie à faible vitesse d'écoulement et la chambre de liaison (140) entre elles.
